# EUROPEAN PATENT SPECIFICATION

(11) **EP 0 505 570 B1**
(45) Date of publication and mention of the grant of the patent: **03.05.1995**
(21) Application number: 91915992.1
(22) Date of filing: 12.09.1991
(51) Int. Cl.: B23H 7/20

(54) **METHOD OF AUTOMATICALLY RETRIEVING WORKING CONDITIONS IN ELECTRIC DISCHARGE**
VERFAHREN ZUM SELBSTTÄGIGEN ABRUF VON BEARBEITUNGSBEDINGUNGEN FÜR EINE ELEKTROEROSIONSMASCHINE
PROCEDE DE RECHERCHE AUTOMATIQUE DES CONDITIONS D'USINAGE DANS UNE MACHINE D'USINAGE PAR ETINCELAGE

(30) Priority: 13.09.1990 JP 243131/90
(43) Date of publication of application: 30.09.1992
(73) Proprietor: FANUC LTD., Minamitsuru-gun, Yamanashi 401-05 (JP)
(72) Inventor: SAKURAGAWA, Tomonobu, Fanuc Dai-3 Vira-karamatsu, Minamitsuru-gun, Yamanashi 401-05 (JP); ASO, Toshiyuki, Room 7-208, Fanuc Manshon Harimomi, Minamitsuru-gun, Yamanashi 401-05 (JP)
(74) Representative: Billington, Lawrence Emlyn
(86) International application number: JP9101215
(87) International publication number: WO9205005

(56) References cited:
- JP-A- 2 153 476

## Description

The present invention relates to a method for setting the working conditions for an electric discharge machine, particularly to a method for automatically searching working conditions based on an expert system.

A typical wire-cut type electric discharge machine comprises: a machine body including a work table for setting up a work thereon and a wire driving unit for feeding a wire electrode; a device for supplying a working fluid for insulation between the work and the wire electrode, cooling the wire electrode and removing working scraps; an electric power device for generating an electric discharge pulse between the work and the wire electrode; and a control device for controlling these operating units.

Now the working characteristics of the above electric discharge machine, chiefly characterized by a working speed, a working accuracy and surface roughness, vary depending on a number of working conditions including the property of wire to be used, the property of work to be used and the operating conditions of various operating units in the electric discharge machine. In other words, it is no easy matter to obtain an optimum working condition for desired working characteristics.

Conventionally, therefore, it has been common practice that the optimum values for numerous working conditions be determined based on the knowledge and experience of an operator skilled in the electric discharge process.

On the other hand, in order to resolve the problem of the conventional working condition setting method solely dependent on the empirical knowledge of the skilled operator as described above, there is a known method designed so that a set of working conditions suitable for the wire and the work to be used can be searched from among a member of different sets of working conditions stored in the control unit for easier setting of the working conditions. The control unit used for practicing such a working condition search method stores numerous working conditions determined based on operating data of electric discharge machines accumulated over years and thus applicable to various electric discharge machinings using various wires and works, so that when an operator operates a manual data input device of the control unit to specify, for example, a wire radius, a work material and a work thickness, one set of working conditions suiting these input data is automatically looked up.

The above conventional method allows even a non-skilled person to set working conditions based on the selected working conditions. However, an optimum working condition tends to vary depending on the required working characteristic such as the required working accuracy even if the wire radius, the work material and the work thickness remain unchanged. Thus, even this method will not always guarantee optimum working conditions.

In this connection JP 2 153 476 discloses a means for searching, through a database built up over a period of time, to find an optimal set of parameters. Then, once machining has begun, the system uses the actual machine outputs to update the database for future use.

An object of the present invention is to provide an automatic working condition retrieval method for the electric discharge machine, which is built based on an expert system and enables even a non-skilled person to set the optimal working conditions for an electric discharge machine.

In accordance with the present invention there is thus provided a method for automatically searching working conditions for an electric discharge machine comprising the steps of: (a) storing in advance a knowledge base including working condition data and production rules, and an inferential engine in a control unit installed in the electric discharge machine; (b) manually inputting searching conditions including one set of required working characteristic parameters into the control unit; and (c) automatically searching for working conditions conforming to said manually inputted searching conditions; characterised in that the said automatic search in said knowledge base is on the basis of the inferences made by said inferential engine and wherein said step (c) comprises the steps of: automatically searching for a plurality of sets of supposed working characteristic parameters, each set to conform to the searching conditions, by the inferential engine according to the knowledge base, displaying said plurality of sets of supposed working characteristic parameters on a display screen of an interactive unit operable by an operator; manually selecting one set of parameters from among said plurality of sets of supposed working characteristic parameters displayed on the display screen; automatically searching working conditions corresponding to said selected one set of parameters by the inferential engine according to the knowledge base, and displaying the resultant working conditions on the display screen.

Preferably, the one set of required working characteristic parameters includes a required average working speed, a required surface roughness and a required working accuracy, and, more preferably, the searching conditions include the degree of prioritising for each of the required average working speed, the required surface roughness and the required working accuracy.

The step (c2) displays the conformity of each set of supposed working characteristic parameters to the required working characteristic parameters. More preferably, each set of supposed working characteristic parameters includes a supposed average working speed, a supposed surface roughness, and a supposed working accuracy. Preferably, this automatic working condition searching method is applied to the wire-cut type electric discharge machine.

As explained above, according to the present invention, a working condition suiting a searching condition is automatically searched by an inferential engine installed in the control unit according to the manually inputted searching condition and the knowledge base stored in the control unit. Therefore, an adequate working condition can be obtained even by a non-skilled person. Moreover, since a searching condition includes required working characteristic parameters, a working condition for enabling the attainment of the required working characteristics can be obtained.

Preferably, one set of the required working characteristic parameters includes a required average working speed, a required surface roughness and a required working accuracy, and the searching condition includes the ability to prioritise between these parameters. Therefore, it becomes possible to obtain working conditions capable of providing better working characteristics. Still further, plural sets of supposed working characteristic parameters respectively suiting the searching condition and including each of a supposed average working speed, a supposed surface roughness and a supposed working accuracy may automatically be searched. These plural sets of supposed working characteristic parameters may be displayed on the display screen together with the extent of their conformity with the required working characteristic parameters for manual selection. And, subsequently, a working condition corresponding to the manually selected one set of supposed working characteristic parameters is automatically looked up and displayed on the display screen. As a result, it becomes possible to obtain a preferable working condition to provide an excellent working characteristic.

For a better understanding of the invention and to show how the same may be carried into effect, reference will now be made, purely by way of example, to the accompanying drawings, in which:-
Fig. 1 is a schematic diagram showing a method for automatically searching working conditions in accordance with the present invention;
Fig. 2 is a block diagram showing an essential part of a wire-cut type electric discharge machine for practicing a method for automatically searching a working condition in accordance with an embodiment of the present invention;
Fig. 3 is a view exemplarily showing a setting screen for setting a searching condition;
Fig. 4 is a view exemplarily showing a search result screen displaying a search result of supposed working characteristic parameters; and
Fig. 5 is a view exemplarily showing a working condition display screen displaying a search result of a working condition.

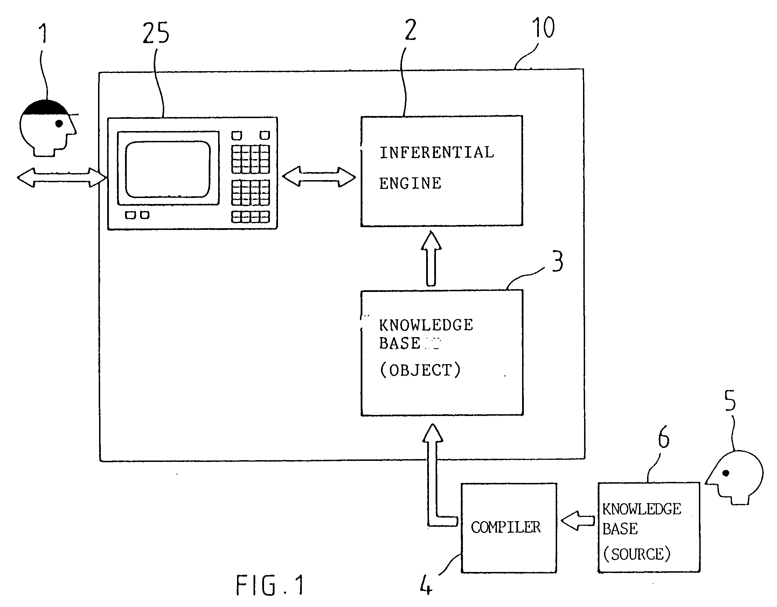

Referring to Fig. 1, an operational principle of a automatic working condition search method according to the present invention is explained in the following.

A source knowledge base 6 is produced, for example, using AI (i.e. artificial intelligence) oriented languages by an expert 5 or with cooperation between an expert 5 and an knowledge engineer, on the basis of knowledge and experience of the expert 5 skilled in electric discharge working process accumulated for many years. The knowledge base 6 includes working condition data as declaratory knowledge relating to an electric discharge working process, and production rules described through an IF-THEN method as procedural knowledge relating to an electric discharge working process. The source knowledge base 6 is converted through a compiler 4 into an object knowledge base 3, which can be utilized by the computer and subsequently stored, for example, in an interactive type numerical control unit 10 with built-in computer,which is, for example, installed in the electric discharge machine.

The inferential engine 2 is an inferential mechanism (i.e. an inferential program) for solving various problems by effectively processing the knowledge base 3, and is, for example, produced by the use of AI oriented languages or constituted by the expert system constructing tools. The inferential engine 2, constituting a rule base system (i.e. a knowledge base system or an expert system in more general meaning), together with the knowledge base 3 is stored in the control unit.

In the case of automatic searching for the working condition, an operator 1 manually inputs a searching condition consisting of the data specifying the type of wire electrode and the type of work to be used in an electric discharge working (for example, a wire diameter, a work material, and a work plate thickness) and desired working characteristic parameters (for example, a desired average working speed, a desired surface roughness, and a desired working accuracy) through a manual input data device equipped with a display device (CRT/MDI) 25 of the numerical control unit.

In response to the input of the searching condition, the computer in the numerical control unit carries out an inferential program. That is, the computer functions as the inferential engine 2. The inferential engine 2 successively processes rules included in the knowledge base 3 and relating to the searching condition. During processing of the rules, working data included in the knowledge base 3 and relating to the searching condition are read out and utilized. Then, if a working condition conforming to the searching condition is looked up by the inferential engine 2, the looked-up working condition is displayed on a display screen of the CRT/MDI 25.

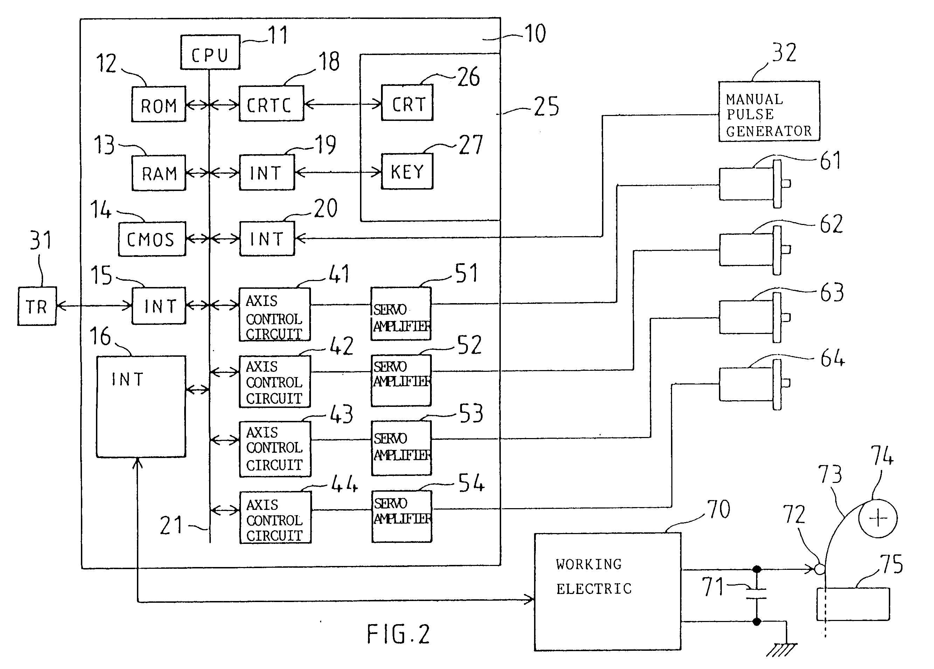

Hereinafter, referring to Fig. 2, a wire-cut type electric discharge machine for practicing a method for automatically searching the working condition in accordance with an embodiment of the present invention is explained.

The wire-cut type electric discharge machine has a working machine main body including a work table with the work 75 sets thereon which is not shown in the drawing, a wire driving unit (only a reel is shown with its reference numeral 74) for feeding a wire electrode 73 and an UV unit (not shown) disposed movably in a horizontal direction above the work 75. The working machine main body has an U-axis servo-motor 61, a V-axis servo-motor 62, an X-axis servo-motor 63, and a Y-axis servo-motor 64 for respectively shifting the UV unit and the work table in a horizontal direction. Each of the servo-motor is equipped with a position detecting pulse coder (not shown). The electric discharge machine further comprises a working electric power source 70 for supplying a high frequency working current through a capacitor 71 and a feeding element 72 to the wire electrode 73, a device (not shown) for supplying a working liquid, operating parts of the working machine main body, and an interactive type numerical control unit (CNC unit) 10 for controlling the working electric power source 70 and the working liquid supply device.

The CNC unit 10 comprises a processor 11; a read only memory (ROM) 12 storing a system program used for an overall control of the CNC unit, the knowledge base 3 of Fig. 1, and an inferential program corresponding to the inferential engine 2 of Fig. 1 and so on, a random access memory 13 consisting of, for example, an SRAM for temporarily memorizing various data; and a non-volatile memory 14, for example, consisting of a CMOS which is backed-up by a battery. The memories 12 to 14 are connected through a bus 21 to the processor 11. The non-volatile memory 14 stores a working program, various parameters and so on.

Then, the CNC unit 10 is connected through an interface 15 to an external device 31 including, for example, a paper tape reader and a paper tape puncher, so that a working program can be read in from the paper tape reader to the CNC unit 10 and an edited working program can be outputted from the CNC unit 10 to the paper tape puncher. On the other hand, the interface 16 of the CNC unit 10 is interposed among the working electric power 70, various operating parts of the working machine main body and the CPU 11, so that a control output from the CPU 11 and a working condition detecting signal from the working electric power 70 etc. can be transmitted through the interface 16 between the CPU and the working electric power source etc.

Furthermore, the CNC unit 10 includes a graphic control circuit 18 for converting a digital signal such as an image data sent out from the CPU 11 into an image signal, interfaces 19 and 20, and the manual data input device 25. The data input device 25 includes a display device 26 with a CRT screen for performing a display operation based on an image signal fed from the graphic control circuit 18 and a data input keyboard 27 for the operator so that the data inputted through the keyboard 27 can be sent out through the interface 19 to the CPU 11.

The interface 20 is connected to a manual pulse generator 32, which is provided on a mechanical operation board (not shown) of the CNC unit 10 for manually and precisely positioning, for example, the work table, so that the pulse signal from the pulse generator 32 can be inputted to the interface 20. The mechanical operation board is equipped with an override switch for manually controlling, for example, the wire feeding speed which is not shown in the drawings.

And, the CNC unit 10 further includes axis control circuits 41 to 44 for inputting respective axis shifting commands from the CPU 11, and servo-amplifiers 51 to 54 for controlling the drive of the servo-motors 61 to 64 according to the respective axis shifting commands from the axis control circuits 41 to 44. Pulse sequences are feedback-controlled as position signals from the pulse coders equipped in the servo-motors 61 to 64 so that the pulse sequences are converted from frequency signals to speed signals to generate speed signals, though they are not shown in the drawings.

Hereinafter, an operation for automatically searching a working condition of the CNC unit, which is carried out through the interaction with an operator, is explained.

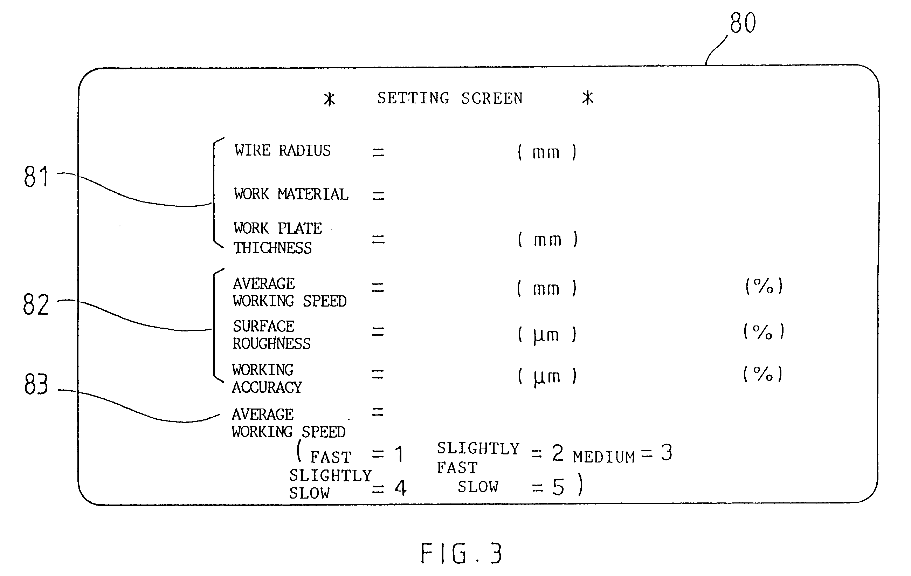

When an operator operates predetermined keys on the keyboard 27 to initiate the automatic search operation for obtaining a working condition, a setting screen 80 (Fig. 3) is displayed on the CRT screen of the display device 26 for permitting the manual setting of the searching condition under the control of the PU 11 which is responsive to the key operation. The setting screen 80 comprises a first setting column 81 for setting a wire radius, a wire material, and a work plate thickness (which practically corresponds to one set of data specifying respective properties of the wire electrode 73 and the work 75 to be used, and more particularly a special one set of working condition), a second setting column 82 for setting numerical values of a desired average working speed, a desired surface roughness, and a desired working accuracy (which practically corresponds to one set of required working characteristic parameters), and a third setting column 83 for setting the desired average working speed qualitatively.

The operator manually inputs through the keyboard 27 the numerical values of a wire diameter and a work plate thickness, letter data representing a wire material, and numerical values of a desired average working speed, a desired surface roughness, and a working accuracy as searching conditions. In this case, the operator can set respective priorities of the desired average working speed, the surface roughness and the working accuracy. For example, the priorities of the desired average working speed, the surface roughness and the working accuracy can be set to 10%, 60% and 30% respectively.

Furthermore, the desired average working speed may selectively be set to one of the numerical values "1" to "5" in the third setting column 83 instead of setting a numerical value for the desired average working speed. With this arrangement, the desired average working speed can be set qualitatively. That is, the numerical value "1" expresses that the desired average working speed is fast, and "2" through "5", slightly faster average working speed desired, medium average working speed desired, slightly slower average working speed desired and slow average working speed desired respectively.

In response to the input of the searching condition, the CPU 11 carries out the inferential program to perform its function as an inferential engine 2. As a result, the production rules included in the knowledge base 3 and relating to the searching condition are successively processed, using the working condition data included in the knowledge base 3 and relating to the production rules. The primary search for plural sets of supposed working characteristic parameters each suiting the searching conditions, and the secondary search for an optimum working condition are executed in this order.

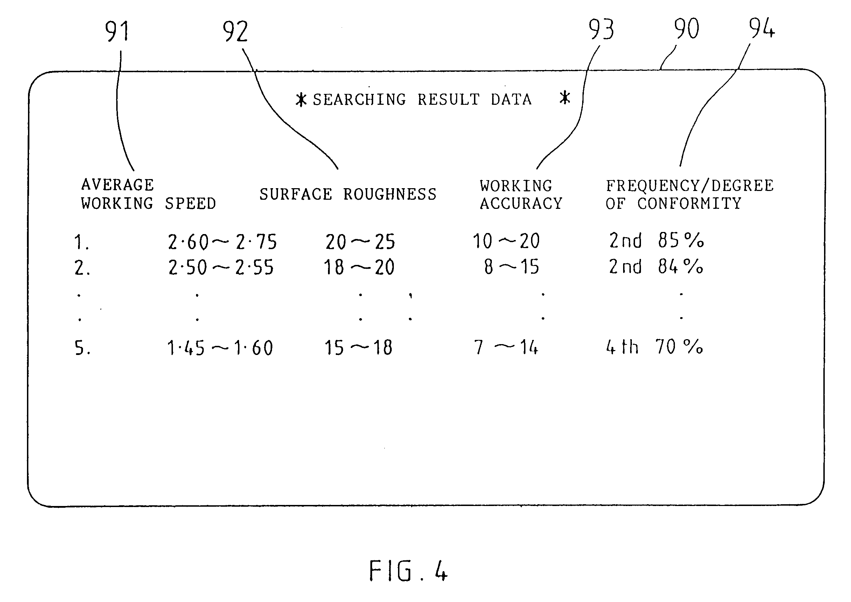

When the primary search is finished, a searching result data 90, which is shown in Fig. 4, is displayed on the CRT screen under the control of the CPU 11. For further detail, there are displayed; for example, five sets of supposed working characteristic parameters each consisting of a supposed average working speed 91, a supposed surface roughness 92 and a supposed working accuracy 93 and conforming to the searching conditions (wire diameter, work material, work plate thickness, desired average working speed, desired surface roughness and desired working accuracy etc.), a supposed frequency 94 of electric discharge working corresponding to the respective supposed sets of parameters, and the degree of conformity 94 of the supposed parameters to the desired parameters in each set.

The operator compares the five sets of supposed parameters and selects his preferred set of parameters. If the operator selects through the keyboard 27, for example, the 5th set of supposed working characteristic parameters, the CPU 11 performs the secondary search as an inferential engine 2.

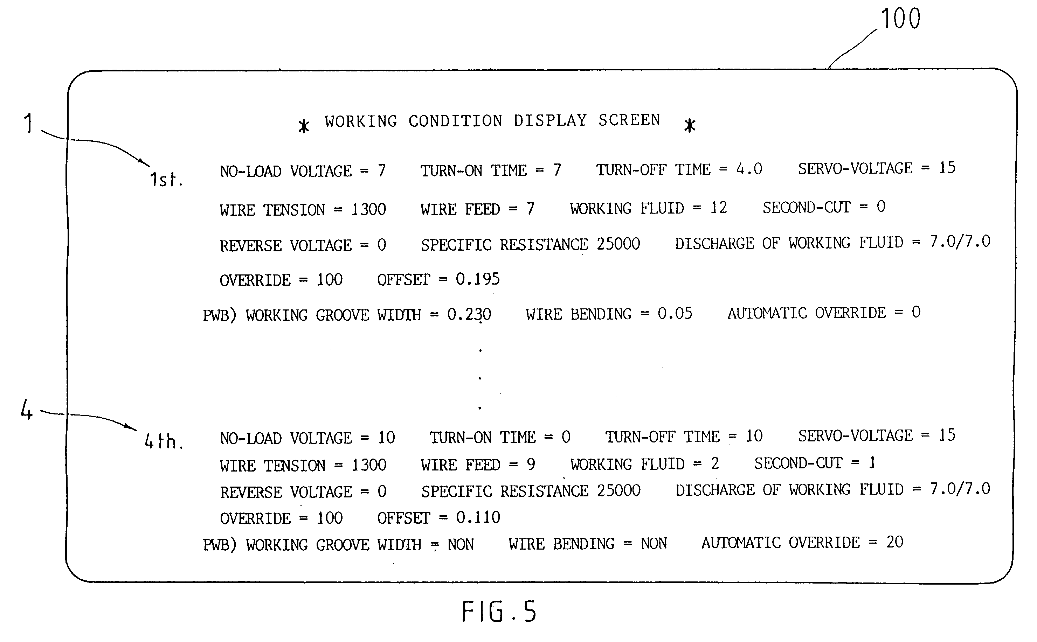

And, when the secondary search is finished, a working condition data is displayed on the CRT screen 100, as shown in Fig. 5, under the control of the CPU 11. In this case, since the 5th set of supposed working characteristic parameters wherein the electric discharge machining is done four times is selected at the end of the primary search, the working conditions corresponding to each of the 1st to 4th electric discharge workings are displayed in detail. Reference numerals 101 and 104 denote working conditions for the 1st and 4th electric discharge workings respectively.

An example of the screen of Fig. 5 shows; a no-load voltage, a turn-on time, a turn-off time and a reverse voltage, which are the working conditions relating to the working electric power source 70; a servo-voltage, a wire tension, a wire feed amount, an offset amount, a working groove width and a wire bending amount which are the working condition relating to the working machine main body; a working fluid amount, a specific resistance and a discharge amount of the working fluid as a working condition relating to the working fluid supplying device; and a second-cut, an override, and an automatic override, which are other working conditions.

After confirming a working condition displayed on the screen 100, the operator registers these working conditions by operating the predetermined keys of the keyboard 27. In response to this key operation, the working conditions are stored, for example, in the non-volatile memory 14 under the control of the CPU 11 for later reference in actually practicing the electric discharge machinings.

The present invention is not limited to the above disclosed embodiment but can variously be modified. For instance, though the present invention is applied to a wire-cut type electric discharge machine in the above embodiment, the present invention can also be applied to a diesinking type electric discharge machine.

The menus displayed in Figs. 3 through 5 show only some examples, and thus these menus layout or arrangements can be modified as occasion demands. For example, a column for setting the desired number of times of the electric discharge machining as one of the searching condition in the setting menu 80.

## Claims

1. A method for automatically searching working conditions for an electric discharge machine comprising the steps of: (a) storing in advance a knowledge base (13) including working condition data and production rules, and an inferential engine (2) in a control unit (10) installed in the electric discharge machine; (b) manually inputting searching conditions including one set of required working characteristic parameters into the control unit; and (c) automatically searching for working conditions conforming to said manually inputted searching conditions, characterised in that the said automatic search in said knowledge base is on the basis of the inferences made by said inferential engine (2) and wherein said step (c) comprises the steps of: (c1) automatically searching for a plurality of sets of supposed working characteristic parameters, each set to conform to the searching conditions, by the inferential engine (2) according to the knowledge base (3), (c2) displaying said plurality of sets of supposed working characteristic parameters on a display screen of an interactive unit (25) operable by an operator; (c3) manually selecting one set of parameters from among said plurality of sets of supposed working characteristic parameters displayed on the display screen; (c4) automatically searching working conditions corresponding to said selected one set of parameters by the inferential engine (2) according to the knowledge base (3), and (c5) displaying the resultant working conditions on the display screen.

2. A method for automatically searching working conditions according to claim 1, wherein said one set of required working characteristic parameters includes a required average working speed, a required surface roughness, and a required working accuracy.

3. A method for automatically searching working conditions according to claim 2, wherein said searching conditions includes the degree of priority for each of the required average working speed, the required surface roughness and the required working accuracy.

4. A method for automatically searching working conditions according to claim 2 or 3, wherein said step (c2) displays the conformity of each set of supposed working characteristic parameters to the required working characteristic parameters.

5. A method for automatically searching working conditions according to any preceding claim, wherein said each set of supposed working characteristic parameters includes a supposed average working speed, a supposed surface roughness, and a supposed working accuracy,.

6. A method for automatically searching working conditions according to any preceding claim, wherein said method is applied to a wire-cut type electric discharge machine.

## Patentansprüche

1. Verfahren zum selbsttätigen Aufsuchen von Arbeitsbedingungen für eine Elektroerosionsmaschine, das Schritte umfaßt zum
(a) Vorabspeichern einer Wissensbank (13), die Arbeitsbedingungs-Daten und Herstellungsregeln enthält, wobei ein Inferenzprozessor (2) in einer Steuereinheit (10) vorgesehen ist, die in die Elektroerosionsmaschine eingebaut ist,
(b) manuellen Eingeben von Suchbedingungen, die einen Satz von erforderlichen arbeitscharakteristischen Parametern enthalten, in die Steuereinheit,
(c) selbsttätigen Aufsuchen nach Arbeitsbedingungen in Übereinstimmung mit den manuell eingegebenen Suchbedingungen,
dadurch **gekennzeichnet,** daß das selbsttätige Aufsuchen in der Wissensbank auf logischen Ableitungen beruht, die durch den Inferenzprozessor (2) erstellt sind ist, wobei Schritt (c) Schritte umfaßt zum
(c1) selbsttätigen Suchen nach einer Vielzahl von Sätzen von vorausgesetzten arbeitscharakteristischen Parametern durch den Inferenzprozessor (2) entsprechend der Wissensbank (3), wobei jeder Satz mit den Suchbedingungen übereinstimmen muß,
(c2) Anzeigen der Vielzahl von Sätzen von vorausgesetzten arbeitscharakteristischen Parametern auf einem Anzeigebildschirm einer interaktiven Einheit (25), die von einer Bedienungsperson bedienbar ist,
(c3) manuellen Auswählen eines Satzes von Parametern aus der Vielzahl von Sätzen von vorausgesetzten arbeitscharakteristischen Parametern, die auf dem Anzeigebildschirm angezeigt sind,
(c4) selbsttätigen Aufsuchen von Arbeitsbedingungen, die dem ausgewählten Satz von Parametern entsprechen, durch den Inferenzprozessor (2) entsprechend der Wissensbank (3) und
(c5) Anzeigen der sich ergebenden Arbeitsbedingungen auf dem Anzeigebildschirm.

2. Verfahren zum selbsttätigen Aufsuchen von Arbeitsbedingungen nach Anspruch 1, bei dem der eine Satz von erforderlichen arbeitscharakteristischen Parametern eine erforderliche mittlere Arbeitsgeschwindigkeit, eine erforderliche Oberflächenrauhigkeit und eine erforderliche Arbeitsgenauigkeit enthält.

3. Verfahren zum selbsttätigen Aufsuchen von Arbeitsbedingungen nach Anspruch 2, bei dem die Suchbedingungen den Grad der Priorität für jeden der Parameter, nämlich die erforderliche Arbeitsgeschwindigkeit, die erforderliche Oberflächenrauhigkeit und die erfoderliche Arbeitsgenauigkeit, enthält.

4. Verfahren zum selbsttätigen Aufsuchen von Arbeitsbedingungen nach Anspruch 2 oder 3, bei dem Schritt (c2) die Übereinstimmung jedes Satzes von vorausgesetzten arbeitscharakteristischen Paramtern mit den erforderlichen arbeitscharakteristischen Parametern anzeigt.

5. Verfahren zum selbsttätigen Aufsuchen von Arbeitsbedingungen nach einem der vorhergehenden Ansprüche, bei dem jeder Satz von vorausgesetzten arbeitscharakteristischen Parametern eine vorausgesetzte mittlere Arbeitsgeschwindigkeit, eine vorausgesetzte Oberflächenrauhigkeit und eine vorausgesetzte Arbeitsgenauigkeit enthält.

6. Verfahren zum selbsttätigen Aufsuchen von Arbeitsbedingungen nach einem der vorhergehenden Ansprüche, wobei das Verfahren auf eine Drahtschneide-Elektroerosionsmaschine angewendet wird.

## Revendications

1. Procédé pour rechercher automatiquement des conditions de travail pour une machine d'usinage par étincelage, comprenant les étapes consistant à : (a) mémoriser à l'avance une base d'informations (13) englobant des données de conditions de travail et des normes de production, ainsi qu'un moteur déductif (2) dans une unité de commande (10) installée dans la machine d'usinage par étincelage; (b) entrer manuellement des conditions de recherche, y compris un jeu de paramètres requis de caractéristiques de travail dans l'unité de commande; et (c) rechercher automatiquement les conditions de travail correspondant auxdites conditions de recherche entrées manuellement, caractérisé en ce que ladite recherche automatique dans ladite base d'informations se fait sur base des déductions réalisées par ledit moteur déductif (2), et dans lequel ladite étape (c) comprend les étapes consistant à : (c1) rechercher automatiquement plusieurs jeux de paramètres supposés de caractéristiques de travail, chacun étant réglé pour correspondre aux conditions de recherche, à l'intervention du moteur déductif (2) conformément à la base d'informations (3), (c2) afficher lesdits plusieurs jeux de paramètres supposés de caractéristiques de travail sur un écran d'affichage d'une unité interactive (25) mise en service par un opérateur; (c3) sélectionner manuellement un jeu de paramètres parmi lesdits plusieurs jeux de paramètres supposés de caractéristiques de travail affichés sur l'écran d'affichage; (c4) rechercher automatiquement les conditions de travail correspondant audit jeu de paramètres sélectionné à l'intervention du moteur déductif (2) conformément à la base d'informations (3); et (c5) afficher les conditions de travail résultantes sur l'écran d'affichage.

2. Procédé pour rechercher automatiquement des conditions de travail selon la revendication 1, dans lequel ledit jeu de paramètres requis de caractéristiques de travail englobe une vitesse de travail moyenne requise, une rugosité superficielle requise et une précision de travail requise.

3. Procédé pour rechercher automatiquement des conditions de travail selon la revendication 2, dans lequel lesdites conditions de recherche englobent le degré de priorité pour la vitesse de travail moyenne requise, pour la rugosité de surface requise et pour la précision de travail requise, respectivement.

4. Procédé pour rechercher automatiquement des conditions de travail selon la revendication 2 ou 3, dans lequel, dans ladite étape (c2), on affiche la correspondance de chaque jeu de paramètres supposés de caractéristiques de travail aux paramètres requis de caractéristiques de travail.

5. Procédé pour rechercher automatiquement des conditions de travail selon l'une quelconque des revendications précédentes, dans lequel ledit jeu respectif de paramètres supposés de caractéristiques de travail englobe une vitesse de travail moyenne supposée, une rugosité de surface supposée et une précision de travail supposée.

6. Procédé pour rechercher automatiquement des conditions de travail selon l'une quelconque des revendications précédentes, dans lequel on applique ledit procédé à une machine d'usinage par étincelage de type à découpe par fil.
